(19) Europäisches Patentamt
European Patent Office
Office européen des brevets

(11) **EP 4 520 540 A1**

(12) **EUROPEAN PATENT APPLICATION**

(43) Date of publication:
**12.03.2025 Bulletin 2025/11**

(21) Application number: **24196375.0**

(22) Date of filing: **26.08.2024**

(51) International Patent Classification (IPC):
**B41J 11/00** (2006.01)    **B41J 2/21** (2006.01)
**G06K 15/02** (2006.01)    **H04N 1/00** (2006.01)
**B41J 15/04** (2006.01)    **B41J 29/393** (2006.01)

(52) Cooperative Patent Classification (CPC):
**B41J 11/0095; B41J 2/2117; B41J 11/0022;
B41J 15/04; G06K 15/023; H04N 1/00031;**
B41J 2029/3935; B41J 2203/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023 JP 2023145323**

(71) Applicant: **CANON KABUSHIKI KAISHA**
**Tokyo 146-8501 (JP)**

(72) Inventors:
• **YASUDA, Ayumi**
**Ohta-ku, Tokyo, 146-8501 (JP)**

• **KURIYAMA, Keiji**
**Ohta-ku, Tokyo, 146-8501 (JP)**
• **SAITO, Serena**
**Ohta-ku, Tokyo, 146-8501 (JP)**
• **NAGAI, Hajime**
**Ohta-ku, Tokyo, 146-8501 (JP)**
• **NISHIOKA, Shingo**
**Ohta-ku, Tokyo, 146-8501 (JP)**
• **GENTA, Shin**
**Ohta-ku, Tokyo, 146-8501 (JP)**
• **WADA, Satoshi**
**Ohta-ku, Tokyo, 146-8501 (JP)**

(74) Representative: **TBK**
**Bavariaring 4-6**
**80336 München (DE)**

(54) **PRINTING APPARATUS, METHOD FOR CONTROLLING PRINTING APPARATUS, AND PROGRAM**

(57)    A printing apparatus(A) includes a feed unit that feeds a printing medium(P); a print unit(9) including first and second arrays of print elements for applying first ink and second ink, respectively, onto the printing medium(P); and a fixation unit located downstream of the print unit(9) in a feed direction(Y-direction) to fixate an image printed on the printing medium(P). The print unit(9) prints a first image on the printing medium(P) by applying the first ink. The feed unit feeds the printing medium(P) having the first image printed thereon to the fixation unit from upstream to downstream in the feed direction(Y-direction). The fixation unit fixates the first image. The feed unit back-feeds the printing medium(P) having the first image fixated thereon to the print unit(9) from downstream to upstream in the feed direction(Y-direction). The print unit(9) prints a second image on the first image by applying the second ink.

```
START
  │
  ▼                                    S1501
EXECUTE PRINT PROCESSING TO PRINT
FOUNDATION IMAGE (FIRST IMAGE)
WITH W INK
  │
  ▼                                    S1502
FEED PRINTING MEDIUM TO
BRING PRINTED FIRST IMAGE TO
IMAGE FIXATION UNIT
  │
  ▼                                    S1503
EXECUTE FIXATION PROCESSING TO
FIXATE FIRST IMAGE
  │
  ▼                                    S1504
BACK-FEED PRINTING MEDIUM TO
BRING FIRST IMAGE TO IMAGE PRINT UNIT
  │
  ▼                                    S1505
EXECUTE LIGHT INTENSITY ADJUSTMENT
PROCESSING FOR OPTICAL SENSOR
USING FIRST IMAGE
  │
  ▼                                    S1506
EXECUTE ADJUSTMENT PROCESSING
  │
  ▼
END
```

**FIG.15**

EP 4 520 540 A1

## Description

BACKGROUND

Field

The present disclosure relates to a printing apparatus that prints an image by ejecting ink from nozzles of a printhead.

Description of the Related Art

There is known an inkjet printing apparatus that prints an image by ejecting ink to a non- or low-absorbent printing medium and drying the ink applied onto the printing medium using a fixation unit having a heating or air-blowing function. In some cases, such an apparatus may be used to print an image on a colored or transparent printing medium, which has a lower reflectivity than a white printing medium. Also, in order to print a high-quality image, adjustments need to be made on the printhead and on the printing apparatus using a printing medium on which an image will actually be printed.

Japanese Patent Laid-Open No. 2021-133601 discloses a technique for performing color measurement by printing an adjustment pattern using a printing medium having a backing and a sheet attached to the backing. In this technique, a color chart is printed after a foundation is printed using a white ink to eliminate the influence of the color of the backing.

Japanese Patent Laid-Open No, 2021-133601, however, does not consider a fixation step of drying ink using a fixation unit having a heating or air-blowing function. After a foundation is printed on a non- or low-absorbent printing medium using a first ink, an adjustment pattern is printed using a second ink without the foundation undergoing a fixation step. In this case, the colors of the first and second inks may mix due to the foundation being insufficiently dry. This consequently leads to problems such as the print positions of the second ink being displaced and dots failing to have a desired shape.

In view of the above problems, the present disclosure aims to make it possible to automatically perform various kinds of adjustment of a printing apparatus capable of printing using a white ink.

SUMMARY OF THE DISCLOSURE

The present invention in its first aspect provides a printing apparatus as specified in claims 1 to 17.
The present invention in its second aspect provides a method as specified in claims 18.
The present invention in its third aspect provides program as specified in claim 19.
Further features of the present invention will become apparent from the following description of exemplary embodiments with reference to the attached drawings.

BRIEF DESCRIPTION OF THE DRAWINGS

Fig. 1 is a perspective view of a printing apparatus;
Fig. 2 is a schematic side view of the printing apparatus;
Fig. 3 is a schematic diagram of a printhead;
Figs. 4A and 4B are schematic diagrams of an optical sensor;
Fig. 5 is a block diagram showing the configuration of a control system of the printing apparatus;
Figs. 6A to 6C are diagrams illustrating multi-pass printing;
Figs. 7A to 7C are diagrams illustrating a registration adjustment pattern;
Fig. 8 is a flowchart of processing performed upon execution of registration adjustment processing (or conveyance adjustment processing);
Figs. 9A and 9B are diagrams illustrating a conveyance adjustment pattern;
Figs. 10A and 10B are flowcharts of processing performed upon execution of color calibration;
Fig. 11 is a diagram illustrating a color calibration adjustment pattern;
Figs. 12A to 12D are schematic diagrams showing a case where an image to serve as a foundation is fixated;
Figs. 13A to 13C are schematic diagrams showing a case where an image to serve as a foundation is not fixated;
Fig. 14 is a flowchart of processing performed upon execution of various kinds of adjustment;
Fig. 15 is a detailed flowchart of S1403;
Fig. 16 is a flowchart of processing to print a given image on a foundation image; and

Fig. 17 is a flowchart of color calibration of W nozzles.

DESCRIPTION OF THE EMBODIMENTS

[First Embodiment]

An embodiment of the present disclosure is described in detail below with reference to the drawings.

<Configuration of an Inkjet Printing Apparatus>

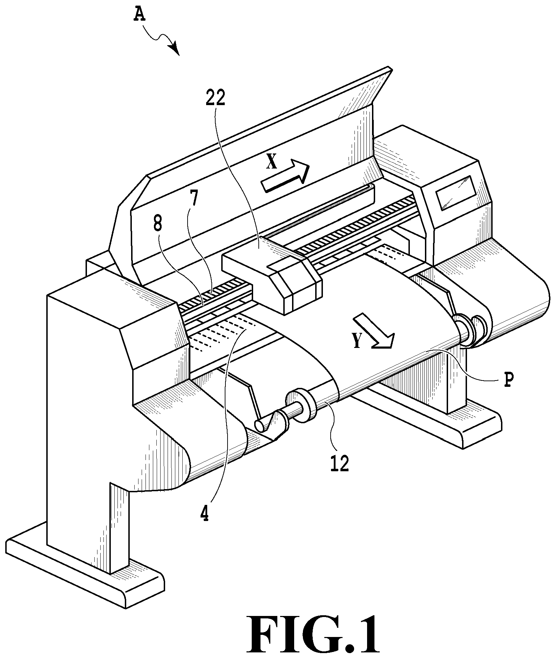

Fig. 1 is a perspective view showing the outer appearance of an inkjet printing apparatus A (hereinafter also referred to as a printing apparatus or a printer) according to the present embodiment. The printing apparatus A is what is called a serial-scan printer and prints an image by scanning a printhead in an X-direction (a main scanning direction) intersecting with (or specifically orthogonal to) a Y-direction (a sub scanning direction), which is a direction in which a printing medium P is conveyed. The configuration of the printing apparatus A and an overview of its printing operation are described below with reference to Fig. 1.

First, by a conveyance roller driven by a conveyance motor (not shown) via gears, the printing medium P is conveyed in the Y-direction toward a winding spool 12 that holds the printing medium P. Meanwhile, with the printing medium P being at a predetermined conveyance position, a carriage 22 is, by a carriage motor (not shown), scanned (moved) in a reciprocating manner along a guide shaft 8 extending in the X-direction. Then in the process of this scanning, an ink ejection operation is performed at a timing based on a position signal obtained by an encoder 7. In the ink ejection operation, ink is ejected from the nozzles of a printhead (to be described later) attachable to the carriage 22, thereby printing an image with a certain band width corresponding to the nozzle array range. After that, the printing medium P is conveyed, and an image for the next band width is printed. The printing apparatus A of the present embodiment is configured to perform the ejection operation with a scan speed of 40 inches per second and a print resolution of 1200 dpi (at the interval of 1/1200 inches). However, it is also possible to scan the printhead at a speed faster than 40 inches per second.

A carriage belt can be used to transmit driving force of the carriage motor to the carriage 22. Note that instead of the carriage belt, other transmission means can be used, such as, for example, a configuration having a lead screw which extends in the X-direction and is driven and rotated by the carriage motor and an engagement unit provided to the carriage 22 and configured to engage with a groove on the lead screw.

The printing medium P being fed is sandwiched and conveyed by a paper-feed roller and a pinch roller and is led to a print position on a platen 4 (a position within a region where the printhead can scan and where the printhead performs printing). Hereinbelow, an image printing configuration around the print position is called an "image print unit" (an image print means). In a state where the printing apparatus is in an idle state, the face surface of the printhead is typically capped. Thus, the cap is removed before printing to bring the printhead into a printable/scannable state. After that, once data for one scan has accumulated in a buffer, the carriage 22 is scanned by the carriage motor, and printing is performed as described above.

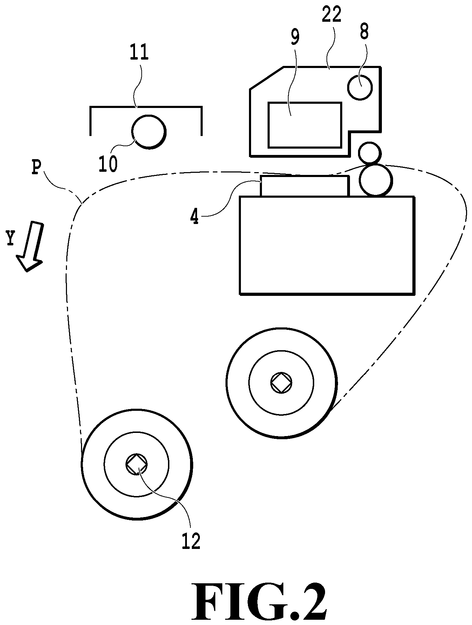

Fig. 2 is a schematic side view of the main body of the printing apparatus A. A curing region is provided downstream, in the sub scanning direction Y, of a position where a printhead 9 attached to the carriage 22 scans in a reciprocating manner in the X-direction (the main scanning direction) (hereinbelow, an image fixating configuration around the curing region is called an "image fixation unit (an image fixation means)." In the image fixation unit, a heater 10 is disposed, supported on a frame (not shown), and liquid-form ink on the printing medium P is dried using heat. The heater 10 is covered by a heater cover 11, and the heater cover 11 serves the function of allowing heat from the heater 10 to be efficiently applied onto the printing medium P and the function of protecting the heater 10. After an image is printed on the printing medium P by the printhead 9, the printing medium P is wound around the winding spool 12 and is formed into a wound-up medium in a roll shape. Specific examples of the heater 10 include a sheathed heater and a halogen heater. The heating temperature of the heater at the above-described image fixation unit is set considering film formability and productivity regarding water-soluble resin particles and the heat resistance of the printing medium P. Note that heating by the heating unit in the image fixation unit may be, e.g., heating from above by blowing hot air or heating from below a printing medium using a contact-type heat-conducting heater. Also, although the heating unit is located at a single location in the present embodiment, it may be provided at two locations and used together as long as the measurement temperature measured above the printing medium P by a radiation thermometer (not shown) does not exceed a set value for the heating temperature.

The printing apparatus A in the present embodiment can perform what is called multi-pass printing, in which an image is printed on a predetermined region (1/n band) on the printing medium P with a plurality of scans (n scans) of the printhead. Details of this multi-pass printing will be described later.

<Configuration of the Printhead>

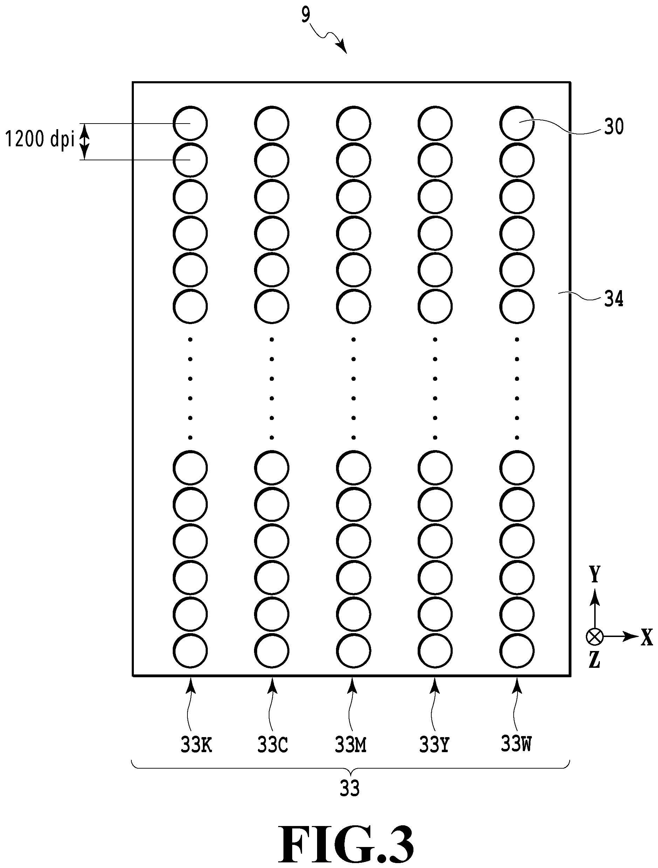

Fig. 3 shows a nozzle surface 34 of the printhead 9 in the present embodiment. The printhead 9 has a nozzle array 33K that ejects a black ink, a nozzle array 33C that ejects a cyan ink, a nozzle array 33M that ejects a magenta ink, a nozzle array 33Y that ejects a yellow ink, and a nozzle array 33W that ejects a white ink. Note that in a case where there is no need to make any particular distinction between colors, they are collectively referred to as nozzle arrays 33 herein. Also, this collective reference rule similarly applies to constituents other than the nozzle arrays.

In the printhead 9, the nozzle array 33K, the nozzle array 33C, the nozzle array 33M, the nozzle array 33Y, and the nozzle array 33W are arranged in this order in the +X-direction. These nozzle arrays are each configured by 1280 nozzles 30 arrayed in the Y-direction (an array direction) at a density of 1200 dpi, the nozzles 30 ejecting a corresponding ink. Note that in the present embodiment, the amount of ink ejected from a single nozzle 30 is approximately 4.5 pl.

These nozzle arrays are connected to their respective ink tanks (not shown) storing the corresponding inks and are supplied with the inks. Note that the printhead 9 and the ink tanks in the present embodiment may be configured integrally with each other or separately from each other.

Energy generating elements (hereinafter also referred to as print elements) are disposed at the printhead 9. Each energy generating element generates ejection energy for ejecting ink from a nozzle. An electrothermal converter, which heats ink locally to cause film boiling and ejects ink using the pressure of the film boiling, is used as the energy generating element. However, the technique of the present disclosure is not limited to electrothermal converters and can also be applied to a case of using electromechanical conversion elements.

<Optical Sensor>

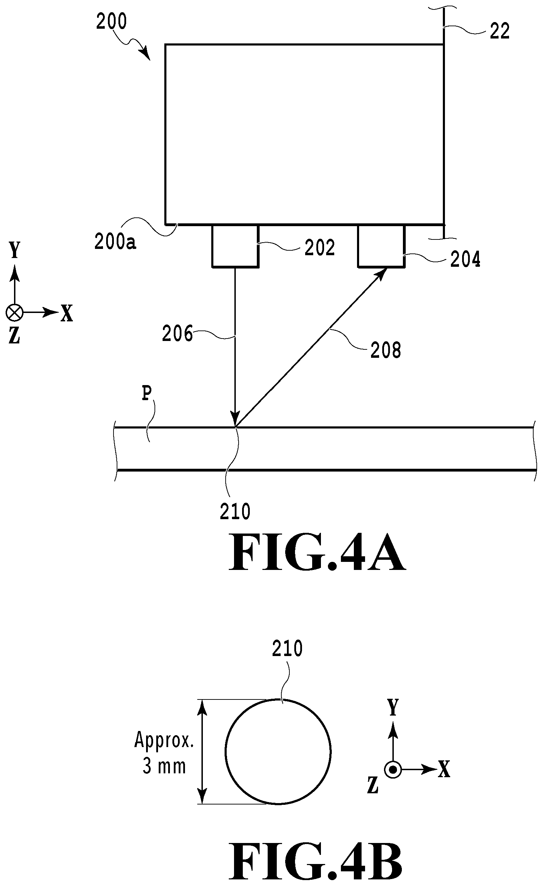

Fig. 4A is a schematic diagram showing a schematic configuration of an optical sensor, and Fig. 4B is a diagram showing a detection spot. An optical sensor 200 is provided and fixed to the carriage 22 so that a measurement region may be located downstream in the Y-direction, i.e., in the +Y-direction, of the plurality of nozzle arrays provided at the printhead 9. A lower surface 200a of the optical sensor 200 is located at the same position as the nozzle surface 34 in the Z-direction or located downstream of the nozzle surface 34 in the +Z-direction.

The optical sensor 200 has a light emitting unit 202 implemented by a visible LED of, e.g., red, green, or blue and a light receiving unit 204 implemented by a photodiode. The light emitting unit 202 and the light receiving unit 204 are provided at the lower surface 200a of the optical sensor 200. The light emitting unit 202 irradiates the printing medium P with light, and the light receiving unit 204 receives the light reflected from the printing medium P. Thus, in the optical sensor 200, light 206 emitted from the light emitting unit 202 is irregularly reflected by the printing medium P, and this reflected light 208 is received by the light receiving unit 204. The diameter of a detection spot 210 where the light emitted by the light emitting unit 202 is irregularly reflected by the printing medium P is, for example, substantially 3 mm.

The light receiving unit 204 passes a detection signal (an analog signal) of the received reflected light 208 to a control circuit on an electric board in the printing apparatus A via a flexible cable (not shown) or the like, and the detection signal is converted into a digital signal by an A/D converter in the control circuit. For detection of the optical characteristics of an adjustment pattern to be described later, the conveyance of the printing medium P in the Y-direction and the movement of the carriage 22 having the optical sensor 200 attached thereto in the X-direction are alternately performed. Then, in synchronization with a timing based on a position signal obtained by the encoder 7, the optical sensor 200 detects the density of an image printed on the printing medium P as an optical reflectivity.

<Configuration of the Control System>

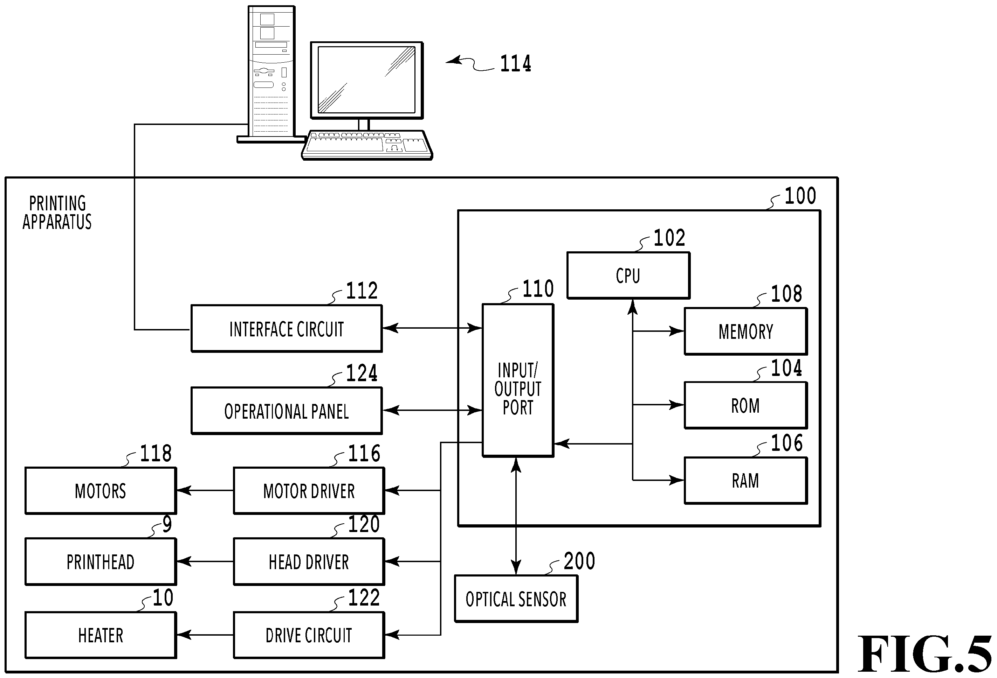

The configuration of the control system of the printing apparatus A is described below. Fig. 5 is a block diagram showing the configuration of the control system of the printing apparatus.

A control unit 100 that performs overall control of the printing apparatus has a CPU 102, a ROM 104, a RAM 106, and a memory 108. Based on various programs, the CPU 102 performs, e.g., control of the operation of each constituent of the printing apparatus and processing on image data inputted. The ROM 104 functions as memory to store programs such as ones related to various kinds of control executed by the CPU 102 and ones related to processing of image data. The RAM 106 temporarily stores various kinds of data used for control by the printing apparatus. The memory 108 stores various kinds of data such as mask patterns and adjustment patterns to be described later. The control unit 100 also has an input/output port 110 and is connected to various drivers, drive circuits, and the like via the input/output port 110.

The control unit 100 is connected to an interface circuit 112 via the input/output port 110 and is connected to a host apparatus 114 via this interface circuit 112. The control unit 100 is also connected to a user-operable operation panel 124 via the input/output port 110. A user inputs image data to the printing apparatus via the host apparatus 114 and inputs various kinds of information to the printing apparatus via the host apparatus 114 and the operation panel 124. The control unit 100 is also connected to a motor driver 116 via the input/output port 110, and controls driving of motors 118 via the motor driver 116. Note that in Fig. 5, various motors in the printing apparatus, such as a motor for moving the carriage 22 and a motor for driving the conveyance unit that conveys the printing medium, are collectively referred to as the motors 118.

The control unit 100 is connected to a head driver 120 via the input/output port 110 and ejects ink by controlling the printhead 9 via the head driver 120. The control unit 100 is also connected to a drive circuit 122 via the input/output port 110 and controls driving of the heater 10 via the drive circuit 122. The control unit 100 is further connected to the optical sensor 200 via the input/output port 110, and the control unit 100 controls driving of the optical sensor 200 and based on an output from the optical sensor 200, detects the optical characteristics of an adjustment pattern. In this way, in the present embodiment, the control unit 100 and the optical sensor 200 function as a detection unit capable of detecting the optical characteristics of an image printed on a printing medium.

In the control unit 100, the CPU 102 converts image data inputted from the host apparatus 114 into print data and stores the print data into the RAM 106. Specifically, after obtaining bitmap image data in which R, G, and B are each represented by 8-bit (256-level) information (0 to 255), the CPU 102 converts the image data into multi-value data represented by K, C, M, Y, and W used in printing. By this color conversion processing, multi-value data is generated, in which each of a plurality of pixels is represented by 8-bit, 256-level information (0 to 255) defining the tones of the inks K, C, M, Y, and W.

Next, the multi-value data represented by K, C, M, Y, and W is quantized to generate quantized data (binary data) in which, about each pixel, each of the K, C, M, Y, and W inks is represented by 1-bit binary information (0 or 1) indicating whether the ink is ejected to the pixel. Publicly known various quantization methods can be used for this quantization processing, such as the error diffusion method, the dithering method, and the index method. After that, distribution processing is performed to distribute the quantized data to a plurality of scans performed by the printhead 9 with respect to a unit region. As a result of this distribution processing, print data is generated, which is represented by 1-bit, binary information (0 or 1) defining whether the K, C, M, Y, and W inks are each ejected or not for each pixel in each of a plurality of scans on a unit region on the printing medium P. This distribution processing is performed using mask patterns defining whether to permit ejection of ink to each pixel, the mask patterns corresponding to the respective plurality of scans. Note that the generation of the print data is not limited to being executed by the control unit 100. The processing may be executed by the host apparatus 114, or part of the processing may be performed by the host apparatus 114, and the rest of the processing may be performed by the control unit 100.

<Multi-Pass Printing Method>

In the present embodiment, the printing apparatus prints an image using what is called multi-pass printing, in which the image is printed on a predetermined region on a printing medium with a plurality of scans using the K, C, M, Y, and W inks.

First, multi-pass printing using the entire nozzle array region is described using the W ink and the K ink as an example.

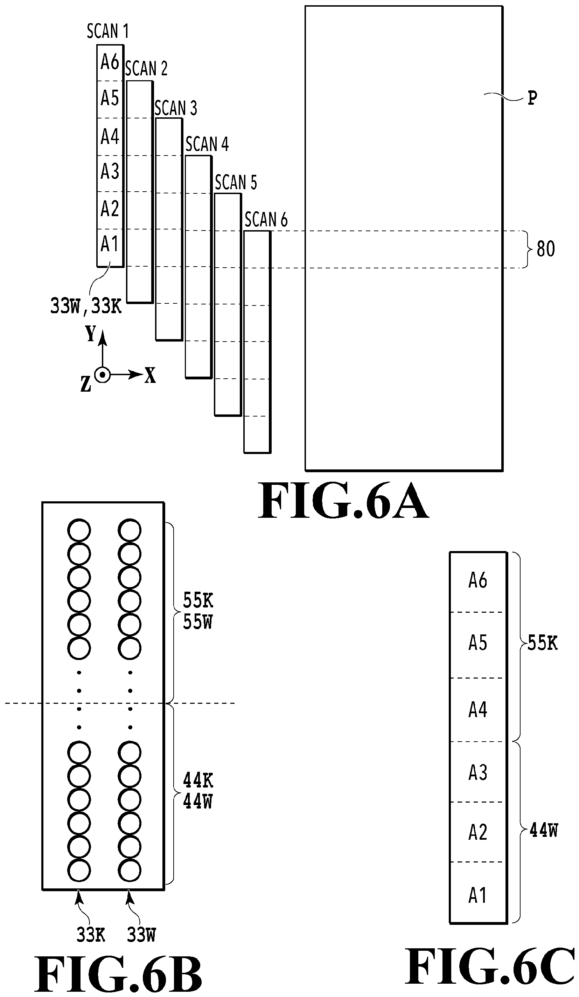

Fig. 6A is a diagram illustrating a multi-pass printing method performed using the entire nozzle array regions of the W ink and the K ink. The nozzle array 33W and the nozzle array 33K are each divided into six nozzle groups A1 to A6 arranged in the Y-direction and eject the W ink and the K ink to a predetermined region in six scans from the respective six nozzle groups A1 to A6. Print data for the W ink and print data for the K ink are each distributed to the six scans so that printing of an image may be completed by the six scans. Although the printing medium P is actually conveyed downstream in the Y-direction between the scans of the printhead 9, the printhead 9 is depicted in Figs. 6A to 6C as if moving upstream in the Y-direction between the scans.

First, at the first scan (scan 1), according to the print data for the W ink and the print data for the K ink corresponding to scan 1, the W ink and the K ink are ejected to a predetermined region 80 from the nozzle groups A1 in the nozzle array 33W and the nozzle array 33K. After completion of scan 1, the printing medium is conveyed in the Y-direction by a distance corresponding to a single nozzle group. After that, the second scan (scan 2) is performed, ejecting the W ink and the K ink to the predetermined region 80 from the nozzle groups A2. After that, the conveyance of the printing medium and the ink ejection from the printhead are performed alternately to eject the inks to the predetermined region 80 from the nozzle groups A3 to A6 at the third to sixth scans. Multi-pass printing to the predetermined region 80 is thus completed.

Next, a multi-pass printing method that uses a different region of the nozzle array for each color of ink is described. Fig. 6B is a diagram illustrating, of all the nozzles of the nozzle array 33K and the nozzle array 33W, a nozzle region corresponding to the nozzle groups A1 to A3 and a nozzle region corresponding to the nozzle groups A4 to A6. The nozzle array 33K has a nozzle region 44K including the nozzle groups A1 to A3 and a nozzle region 55K including the nozzle groups A4 to A6. Similarly, the nozzle array 33W has a nozzle region 44W including the nozzle groups A1 to A3 and a nozzle region 55W including the nozzle groups A4 to A6.

Fig. 6C is a diagram showing that, of the nozzle groups A1 to A6 shown in Fig. 6A, the W ink is ejected from the nozzle groups A1 to A3 in the nozzle region 44W, and the Kink is ejected from the nozzle groups A4 to A6 in the nozzle region 55K. The print data for the W ink is distributed so that printing of the image may be completed by the first to third scans, and the print data for the K ink is distributed so that printing of the image may be completed by the fourth to sixth scans.

First, at the first scan (scan 1), according to the print data for the W ink corresponding to scan 1, the W ink is ejected to the predetermined region 80 from the nozzle group A1 in the nozzle array 33W. After completion of scan 1, the printing medium is conveyed in the Y-direction by a distance corresponding to a single nozzle group. After that, the conveyance of the printing medium and the ink ejection from the printhead are performed alternately to perform the second and third scans (scans 2 and 3), ejecting the W ink to the predetermined region 80 from the nozzle groups A2 and A3 in the nozzle array 33W. The image of the W ink is completed by the printing in scan 3. Next, according to the print data for the K ink corresponding to scan 4, the K ink is ejected to the predetermined region 80 from the nozzle group A4 in the nozzle array 33K. After that, the conveyance of the printing medium and the ink ejection from the printhead are performed alternately to perform the fifth and sixth scans with respect to the predetermined region 80, ejecting the K ink from the nozzle groups A5 and A6 in the nozzle array 33K. Multi-pass printing onto the predetermined region 80 is thus completed.

In this way, different sets of nozzle array groups are used for the W ink and the K ink, so that of the six scans with respect to the predetermined region 80, the first three scans are used to complete the image of the W ink, and the second three scans are used to complete the image of the K ink. Thus, on the predetermined region 80, an image of the K ink can be printed on top of the image printed using the Wink.

<Inks>

The K ink, the C ink, the M ink, the Y ink, and the W ink used in the present embodiment are described below. These inks each contain a solid component for printing an image and a liquid component that evaporates. Examples of the solid component include color materials such as a pigment and a dye, and examples of the liquid component include water and water-soluble organic solvent. All the inks contain water-soluble resin particles for bringing the color material into close contact with a printing medium and improving the resistance of the printed image against abrasion (fixation property).

<Printing Medium>

The printing apparatus of the present embodiment performs printing on a low-permeable printing medium into which moisture is difficult to permeate. A low-permeable printing medium herein refers to a medium which does not absorb water whatsoever or absorbs only a slight amount of water, as described earlier. Thus, a water-based ink containing no organic solvent would be repelled and cannot print an image. However, a low-permeable printing medium is excellent in water resistance and weather resistance and is suitable as a medium on which to print an image to obtain a printed product expected to be used outdoors. Usually, a printing medium with a water contact angle of 45° or greater or preferably 60° or greater at 25°C is used.

Examples of a low-permeable printing medium include a printing medium having a plastic layer formed as the outermost surface of a base material, a printing material having no ink receiving layer formed on a base material, a sheet or film of glass, YUPO, or plastic, and a banner. Examples of the plastic applied above include polyvinyl chloride, polyethylene terephthalate, polycarbonate, polystyrene, polyurethane, polyethylene, and polypropylene. These low-permeable printing media have excellent resistance to water, light, and abrasion and are therefore typically used for printing of a printed product for outdoor display.

As an example of a method for evaluating the permeability of a printing medium, the Bristow's method described in "Method for Determining the Liquid Absorbability of Paper and Board" in the paper and pulp testing method No. 51 in JAPAN TAPPI can be used. A measurement method using the Bristow's method is briefly described next. First, a predetermined amount of ink is poured into a storage container having an opening slit of a predetermined size. Then, the storage container is brought into contact, through the slit, with a printing medium processed into a strip shape and wound around a disk. Next, the disk is rotated with the storage container fixed in position, and the area (length) of an ink strip transferred to the printing medium is measured. Based on this area of the ink strip, a transfer amount ($ml \cdot m^{-2}$) per second per unit area can be calculated. In the present embodiment, a printing medium is regarded as a low-permeability printing medium in a case where its ink transfer amount (absorption amount) measured with the Bristow's method at 30 $msec^{1/2}$ is smaller than 10 $ml \cdot m^{-2}$.

<Various Kinds of Adjustment>

Various kinds of adjustment performed in the present embodiment are described below.

(1) Registration Adjustment

First, registration adjustment is described in concrete terms.

The printhead 9 in the present embodiment moves in the main scanning direction and has ink-ejecting nozzles arrayed in a direction (the sub scanning direction) intersecting with the main scanning direction. The printing apparatus using such a printhead 9 needs to perform processing for obtaining proper ejection timings to make the landing positions of ink droplets ejected from the respective nozzle arrays coincide (such processing is called registration adjustment).

Registration adjustment is performed also in bi-directional printing, in which printing is performed with the printhead scanning in a reciprocating manner, so that a landing position from printing in an advancing direction and a landing position from printing in a returning direction may coincide with each other. The registration adjustment in bidirectional printing is achieved by correcting the ejection timing of printing in the returning direction relative to the printing in the advancing direction.

An example method for registration adjustment is to find a correction amount for registration adjustment for making print positions coincide by printing reference patterns with a certain nozzle array to serve as a reference and printing a plurality of patterns with another nozzle array at print positions shifted little by little (the correction amount is hereinafter referred to as a registration adjustment value). Another method is to find a correction amount for registration adjustment for making print positions coincide between the advancing direction and the backward direction by printing reference patterns in printing in the advancing direction and printing a plurality of patterns with shifted print positions in printing in the backward direction.

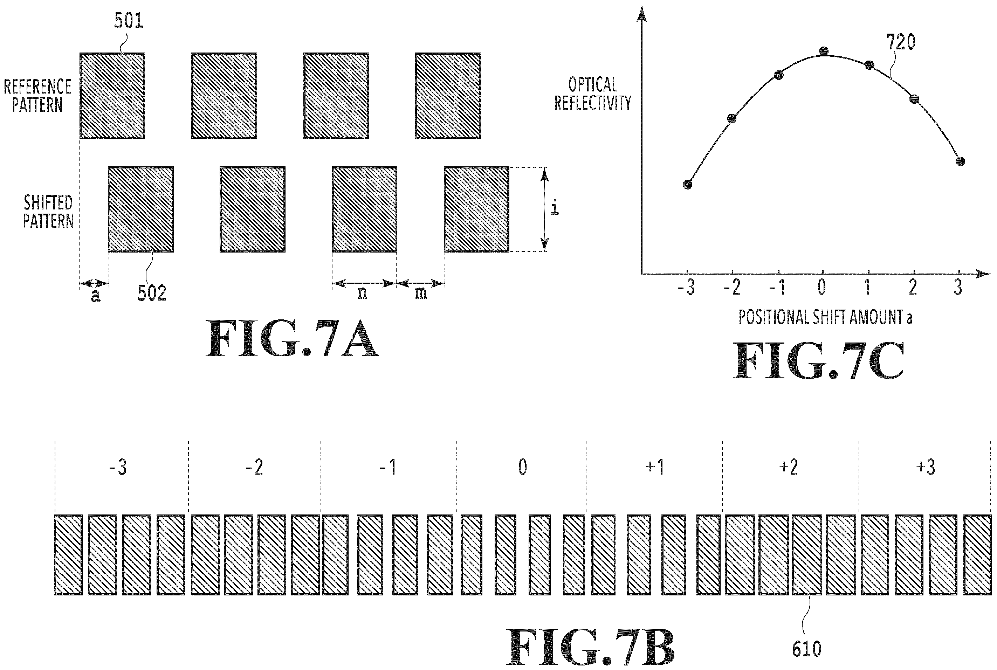

With reference to Figs. 7A to 7C, the configuration of a registration adjustment pattern used in registration adjustment processing is described.

Fig. 7A is a diagram illustrating an example configuration of a registration pattern used for density detection by the optical sensor of the present embodiment.

The registration adjustment pattern is configured such that a rectangular pattern of i pixels $\times$ n pixels is repeated in the main scanning direction at intervals with an empty region of m pixels interposed in between. The registration adjustment pattern includes reference patterns 501 and shifted patterns 502, and the shifted patterns 502 are printed at print positions shifted from the reference patterns 501 by a distance a corresponding to a predetermined number of pixels. The resolution and the shift amount of the registration adjustment pattern may be determined according to the print resolution of the printing apparatus. Note that the print resolution is 1200 dpi in the present embodiment. Although Fig. 7A depicts the reference patterns and the shifted patterns as if they are misaligned longitudinally for the convenience of illustration, these printed patterns overlap in actuality. In other words, the reference patterns are printed while overlapping with the shifted patterns which are shifted in the main scanning direction by the distance a corresponding to a predetermined number of pixels.

Fig. 7B shows a configuration in which a plurality of the registration adjustment patterns shown in Fig. 7A are arranged in the main scanning direction. In this case, an adjustment pattern group 610 shown in Fig. 7B is printed with the shift amount a of the shifted patterns varying from -3 pixels to +3 pixels. In other words, as can be understood from Fig. 7B, in a case where the shift amount is 0, the shifted patterns are printed right on top of the reference patterns. Meanwhile, the larger the shifted amount, the more the shifted patterns are shifted from the reference patterns, and therefore the wider the patterns. For the sake of convenience, Fig. 7B shows an example where the shifted patterns are shifted least from the reference patterns in a case where the shift amount is zero. However, for actually printed registration adjustment patterns, the value of the shift amount with which the shifted patterns are shifted least from the reference patterns differs depending on various conditions.

Different shift amounts of print positions between the reference patterns and the shifted patterns result in different proportions of the ink area to the printing medium, as shown in Fig. 7B.

Fig. 7C shows measurement results 720 of the optical reflectivity obtained by the optical sensor 200 by measuring the shifted patterns shown in Fig. 7B. Note that density and reflectivity have an inverse relation to each other, and the smaller the positional shift between the patterns in the registration adjustment pattern actually printed on the printing medium, the lower the density. In other words, a shifted pattern with higher reflectivity is a pattern with a smaller positional shift; thus, the shift amount for the registration adjustment pattern with the lowest density is set as a registration adjustment value.

Note that the number of registration adjustment patterns to print on the printing medium and the shift amounts thereof may be determined according to an adjustment range required based on the mechanical tolerance of the apparatus and to the unit of a shift of the print position. In other words, they may be determined according to the precision of the registration adjustment processing. Also, the print region of the registration adjustment pattern may be determined according to, e.g., the size of the region detected by the optical sensor 200, the width of a region printable with a single print scan, and the sizes of the registration adjustment pattern group and the printable region of the printing medium.

Also, the nozzle arrays used to print the reference patterns and the shifted patterns are determined based on a combination of the ink color of the nozzle array to be adjusted, a scanning direction, and the like. For example, to perform registration adjustment of an ink color of a nozzle array, a reference nozzle array (e.g., the nozzle array 33K) is determined, and reference patterns are printed by the reference nozzle array. Then, another nozzle array (e.g., the nozzle array 33C) is used to print shifted patterns. In a case of bi-directional printing, registration adjustment can be performed in a similar manner to the above. For example, the nozzle array 33K is used to print reference patterns in the advancing direction, and the nozzle array 33K is used to print shifted patterns in the backward direction. Registration adjustment for bidirectional printing using the same nozzle array 33K can thus be performed accurately. Note that a combination of nozzle arrays is not limited to this, and any nozzle arrays may be combined.

A registration adjustment value is determined or set based on the positional shift amount a thus determined. The registration adjustment value is a value indicative of a correction amount for ink ejection timing, and based on this registration adjustment value, the ink ejection timing of each nozzle array is controlled. Note that the positional shift amount a may be used directly as the registration adjustment value, or a value derived based on the positional shift amount a may be used as the registration adjustment value.

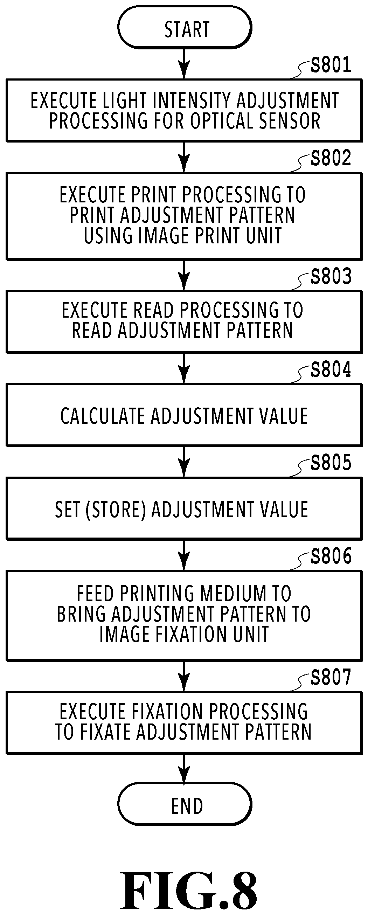

Fig. 8 is a flowchart of the registration adjustment processing executed using a white printing medium in the present embodiment.

First, in Step S801, the CPU 102 executes light intensity adjustment processing for the optical sensor 200 using a paper-white part of the printing medium. Note that "Step SXXX" is hereinafter abbreviated as "SXXX" for brevity.

In S802, the CPU 102 executes print processing using the image print unit to print the adjustment patterns shown in Figs. 7A and 7B on the printing medium.

In S803, the CPU 102 executes read processing using the optical sensor to read the adjustment patterns printed in S802.

In S804, the CPU 102 calculates an adjustment value based on the read detection results in S803.

In S805, the CPU 102 sets a registration adjustment value, i.e., stores the adjustment value calculated in S804 into the RAM 106.

In S806, the CPU 102 feeds the printing medium so as not to cause smudging of ink used to print the adjustment patterns. As a result of the feeding in this step, the adjustment patterns printed on the printing medium are brought to the image fixation unit. Note that the feeding refers to conveying the printing medium in a forward direction. The forward direction is a direction from upstream to downstream in the conveyance direction, i.e., the +Y-direction (see Fig. 1 and the like). Also, as a conceivable way of performing control to bring "the adjustment patterns printed on the printing medium to the image fixation unit," for example, the number of revolutions of the motor corresponding to the distance between the optical sensor and the image fixation unit is stored in advance, and the stored number of revolutions and the actual number of revolutions in actual operation are compared.

Lastly, in S807, using the image fixation unit, the CPU 102 executes fixation processing to fixate the ink used to print the adjustment patterns onto the printing medium, and the registration adjustment processing ends.

(2) Conveyance Adjustment

Next, conveyance adjustment is described in concrete terms.

Conveyance adjustment is to make correction about the sub scanning direction (an amount of conveyance of the printing medium) so that the landing position of a dot formed by a preceding print scan and the landing position of a dot formed by a subsequent print scan performed after conveyance of the printing medium may coincide with each other. One method for the conveyance adjustment is to measure variance in the amount of conveyance occurring at the time of conveyance of a printing medium, by calculating variance in the amount of conveyance based on the difference between two adjustment patterns.

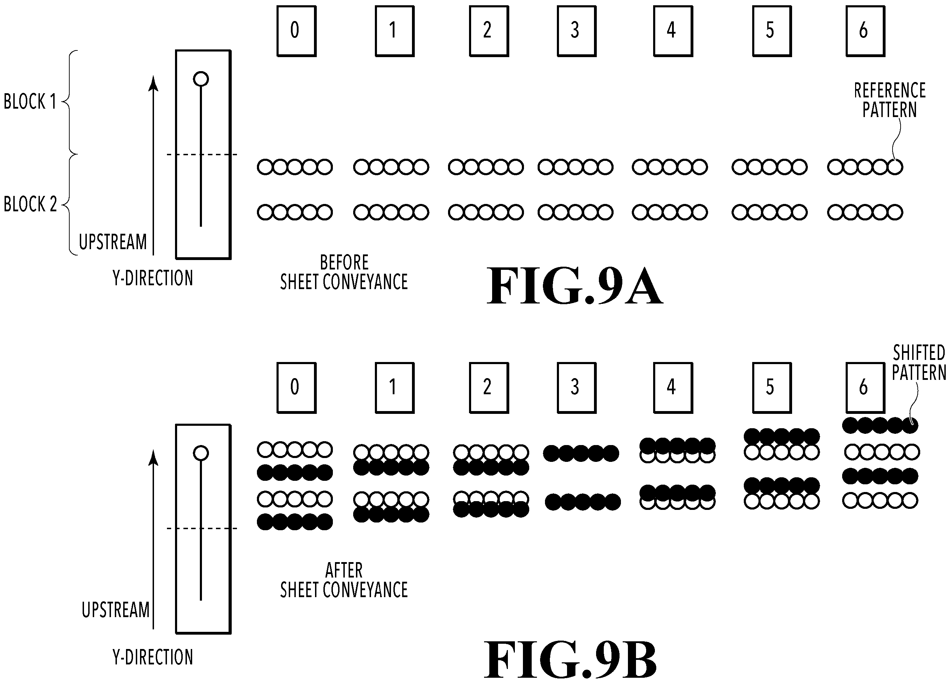

Figs. 9A and 9B are diagrams showing an example of printing a conveyance adjustment pattern using the nozzle array 33K. As shown in Figs. 9A and 9B, a single adjustment pattern is formed by seven patches (denoted as 0 to 6 in Figs. 9A and 9B). Although seven patches are used as an example here, the number of patches is not limited to seven, and any number of them may be set according to the ink and printing medium used, so that an optimal conveyance amount can be set.

A single array of nozzles is divided into two parts in the sub scanning direction. Nozzles in the downstream part is called a block 1, and nozzles in the upstream part is called a block 2. First, as shown in Fig. 9A, reference patterns are printed using predetermined nozzles located in the block 2, which is upstream in the sub scanning direction. The seven reference patterns arranged in the carriage scanning direction are printed by the same predetermined nozzles in the block 2.

Next, a command pulse value is set to 5120, and the printing medium is conveyed. As shown in Fig. 9B, the seven shifted patterns printed using the nozzles in the block 1 are each printed using a different combination of nozzles, thereby shifted relative to the reference patterns. Here, open dots are used to show dots printed using the upstream nozzles, and solid dots are used to show dots printed using the downstream nozzles. In this way, a single patch is formed by a reference pattern and a shifted pattern printed by different print scans from each other.

While the conveyance resolution is a numeral value dependent on the performance of the printer, the printer here is capable of conveying a print medium at a resolution of 9600 dpi. Under these conditions, a command pulse value (the number of nozzles in a half a nozzle array $\times$ the resolution of the nozzle array / the resolution of the conveyance amount) used to convey a printing medium by a distance corresponding to half of the nozzles is as follows.

$$640 \times 25.4/1200/25.4 \times 9600 = 5120 \qquad \cdots (1)$$

Note that in Formula (1), the number of nozzles in a half of the nozzle array is 640, and the resolution of the nozzle array (the interval of the nozzles) is 1200 dpi, and the resolution of the conveyance amount is 9600 dpi. Also, an ideal value of the amount of conveyance of a printing medium conveyed in response to the command pulse value (5120) is as follows.

$$640 \times 25.4/1200 = 13.55 \text{ [mm]} \qquad \cdots (2)$$

After the printing medium is conveyed by the above-described ideal value of the amount of conveyance of the printing medium, an adjustment pattern is printed using the downstream nozzles of the printhead.

For convenience, Fig. 9B shows an example where the patch 3 has the smallest shift between the reference pattern and the shifted pattern. However, on the conveyance adjustment pattern actually printed, the patch identification number with the smallest shift between the reference pattern and the shifted pattern differs depending on various conditions.

Also in the conveyance adjustment, the smaller the positional shift between the reference pattern and the shifted pattern printed on a printing medium, the lower the density. Thus, the amount by which the printing medium was conveyed to print the patch with the lowest density is the ideal conveyance amount. Thus, similarly to the (1) registration adjustment described above, an optimal paper conveyance amount can be derived by selecting the patch with the lowest density (the patch with high reflectivity).

Although the reference patterns are printed using the nozzles in the upstream block 2 and the shifted patterns are printed using the nozzles in the downstream block 1 in the present embodiment, it does not matter which of the block 1 and the block 2 is used to which of the patterns.

Fig. 8 is a flowchart of conveyance adjustment processing executed using a white printing medium in the present embodiment. Conveyance adjustment processing can be performed using the same flowchart as the (1) registration adjustment described above. In other words, in the (1) registration adjustment, the adjustment patterns printed in S802 are the registration adjustment patterns shown in Figs. 7A and 7B, whereas in the (2) conveyance adjustment, the adjustment patterns printed in S802 are the conveyance adjustment patterns shown in Fig. 9A and 9B. Because the conveyance adjustment processing and the registration adjustment processing differ only in the adjustment patterns to print, the flowchart of the conveyance adjustment processing is not described here.

(3) Color Calibration

Next, color calibration is described in concrete terms.

In a printing apparatus having a plurality of printheads and a printing apparatus having a plurality of nozzle arrays like the printhead 9 used in the present embodiment, a printed image may not be able to reproduce desired tonality due to a difference in ejection characteristics between individual printheads or individual nozzle arrays. This is because the printheads or nozzle arrays have different ejection characteristics from the beginning or after passage of time, and different ejection characteristics result in different density values on a printed image.

Color shift correction processing (color calibration) is a technique for addressing difference in tonality due to the difference in the ejection characteristics between the printheads or the nozzle arrays.

Specifically, an adjustment pattern including measurement color patches is printed on a printing medium and is measured to obtain information related to the colors of an image printed by the printhead. Then, a color correction parameter is generated based on the obtained information so that an image with desired tonality may be printed. Image data is corrected using this color correction parameter, so that the image data can be printed with the desired tonality.

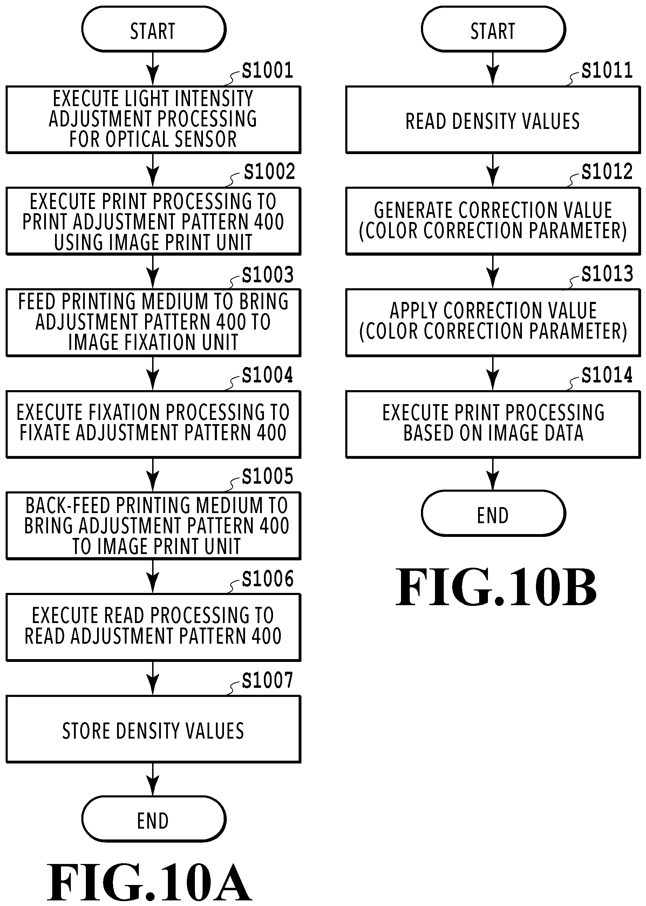

Fig. 10A shows a flowchart of color measurement processing performed upon execution of color calibration using a white printing medium in the present embodiment.

In S1001, the CPU 102 executes light intensity adjustment processing for the optical sensor 200 using a paper white part of a printing medium.

In S1002, the CPU 102 executes print processing using the image print unit to print an adjustment pattern 400 on the printing medium.

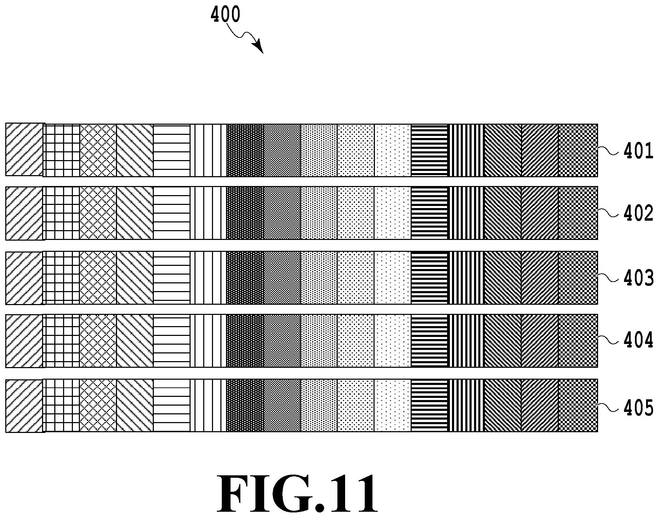

With reference to Fig. 11, the configuration of the adjustment pattern 400 used for color correction parameter generation processing is described. The adjustment pattern 400 printed in S1002 described above is formed by patches for five colors, namely a patch 401 for the K ink, a patch 402 for the C ink, a patch 403 for the M ink, a patch 404 for the Y ink, and a patch 405 for the W ink, each color further including patches of 16 shades.

The adjustment pattern 400 is not fixated onto the printing medium yet immediately after the adjustment pattern 400 is printed. Thus, in S1003, the CPU 102 feeds the printing medium to bring the adjustment pattern 400 to the image fixation unit.

In S1004, the CPU 102 executes fixation processing using the image fixation unit to fixate the adjustment pattern 400.

In S1005, the CPU 102 back-feeds the printing medium to bring the adjustment pattern 400 to the image print unit. Note that back-feeding a printing medium means conveying a printing medium in a reverse direction. A reverse direction is a direction from downstream to upstream in the conveyance direction, i.e., the -Y-direction (see Fig. 1 and the like).

In S1006, the CPU 102 executes read processing using the optical sensor 200 to read the adjustment pattern 400, and measures the density of each patch included in the adjustment pattern 400.

Note that because the optical sensor 200 is provided and fixed to the carriage 22 in the present embodiment, in S1005, the printing medium needs to be back-fed to bring the adjustment pattern 400 to the image printing region where the image print unit can perform printing. However, the installation location of the optical sensor is not limited to the carriage 22, and in a case where the optical sensor is provided at a different location, the printing medium is fed to bring the adjustment pattern to the location where the optical sensor is located.

In S1007, the CPU 102 stores the measurement results, namely the density values of the patches, into the RAM 106 of the control unit 100, and the color measurement processing in Fig. 10A ends.

Fig. 10B is a flowchart showing processing to generate a color correction parameter based on the results from Fig. 10A, correct input image data using the color correction parameter thus generated, and print an image based on the input image data thus corrected.

In S1011, the CPU 102 reads the density values obtained by the measurement processing in Fig. 10A from the RAM 106.

In S1012, based on the density values obtained in S1011, the CPU 102 generates a color correction parameter for correcting input image data.

In S1013, the CPU 102 corrects the input image data by applying the color correction parameter generated in S1012. By this step, the input image data can be corrected so that a reference color having a target color value may be outputted.

In S1014, the CPU 102 executes print processing based on the image data corrected in S1013.

As described above, a color correction parameter is applied as needed, so that a stable image with no color fluctuations can be outputted at all times.

Note that as described in the various kinds of adjustment (1) to (3) above, the light intensity of the optical sensor needs to be adjusted without fail before performing adjustment. Although white plate calibration is typically performed to adjust the light intensity of an optical sensor, the printing apparatus A performs light intensity adjustment by using a printing medium instead of a white plate. For this reason, in a case where a printing medium is not white, light intensity adjustment cannot be performed properly. For example, with a transparent printing medium with a low optical reflectivity, projected light passes through the printing medium and does not return to the light receiving unit. Thus, light intensity adjustment cannot be performed properly. Light intensity adjustment cannot be performed properly with a colored printing medium either because light in a certain wavelength range is absorbed and does not return to the light receiving unit.

Also, because an adjustment pattern is affected by the color of the foundation (a printing medium), the foundation needs to be uniformly white or black in color. In a case of a transparent printing medium, an adjustment pattern is affected by the color of the platen 4 of the printing apparatus A as the color of the foundation of the adjustment pattern. The platen 4 has an uneven shape and therefore has shadows attributable to the unevenness. Also, the platen 4 does not provide a background color suitable for measurement. Thus, proper measurement values cannot be obtained based on the adjustment pattern. In a case of a colored printing medium, similarly, proper measurement values cannot be obtained based on the adjustment pattern because of the color tone of the printing medium.

However, the adjustments (1) to (3) described above can be performed even with a transparent or colored printing medium by using the characteristic configuration of the present embodiment described below, or specifically, by printing the adjustment pattern on a fixated foundation image.

<Characteristic Configurations>

The present embodiment is characteristic in that after the image print unit described above completes printing a first image using a first ink, the image fixation unit described above fixates the first image, and then the image print unit again prints an adjustment pattern on the first image.

The adjustment pattern is a pattern used for adjustment of the printhead or the printing apparatus. After the adjustment pattern is printed, the optical sensor is used to read the printed adjustment pattern. Reading the adjustment pattern printed on the fixated first image enables obtainment of precise measurement values irrespective of the color of the printing medium, the reflectivity thereof for the optical sensor, or the color of a second ink used to print the adjustment pattern.

In a case where an adjustment pattern is printed on a first image serving as a foundation using the above-described low-permeable printing medium with the first image being fixated insufficiently, the color of a first ink used to print the first image and the color of a second ink used to print the adjustment pattern are mixed together. Mixing of the color of the first ink and the color of the second ink hinders the second ink from being printed at proper positions or from being printed in dot shape.

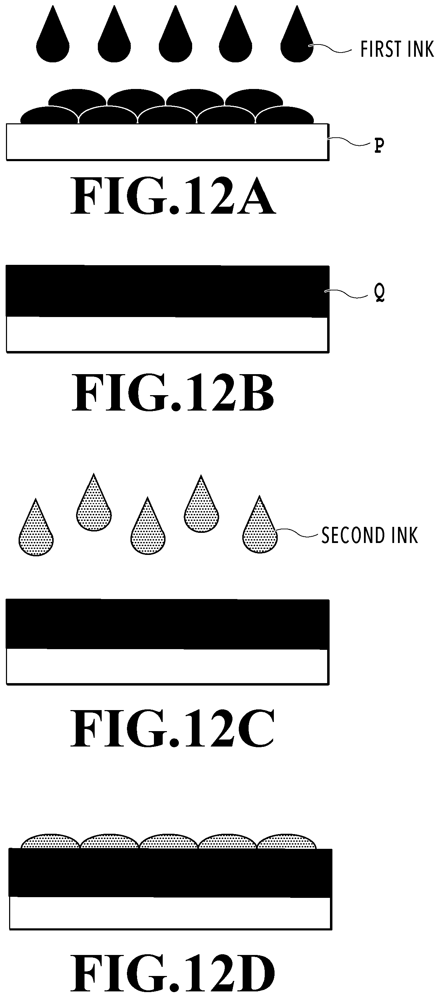

Figs. 12A to 12D are schematic diagrams showing, as sectional views, droplets of the second ink printed on a sufficiently fixated first ink layer (forming the first image). Droplets of the first ink fall onto the printing medium P (Fig. 12A), and the droplets of the first ink on the printing medium P are fixated and thereby become an even layer Q (Fig. 12B). Droplets of the second ink that fall onto the even ink layer Q (Fig. 12C) can spread uniformly at described locations (Fig. 12D).

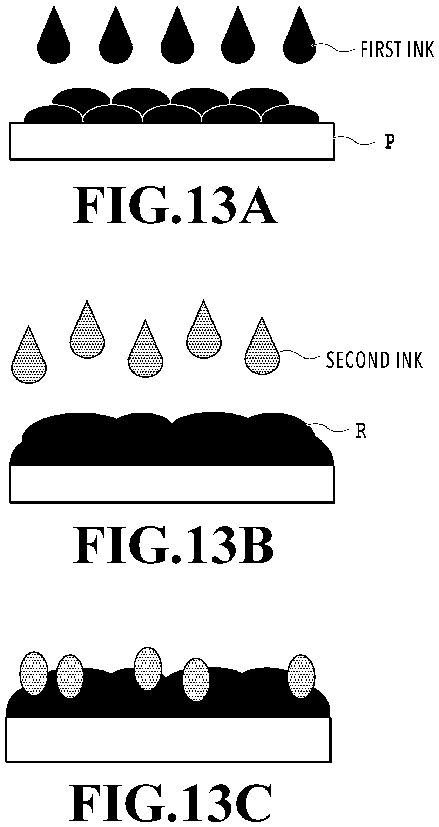

Meanwhile, Figs. 13A to 13C are schematic diagrams showing, as sectional views, droplets of the second ink printed on an insufficiently fixated first ink layer (forming the first image). A state like the one shown in Fig. 13C is obtained by dropping droplets of the first ink onto the printing medium P (Fig. 13A) and then dropping droplets of the second ink on an insufficiently fixated first ink layer R (Fig. 13B). Fig. 13C shows how the droplets of the second ink have moved from desired print positions or are sunk in as a result of falling onto the insufficiently fixated first ink layer R. In a case where the droplets of the second ink thus move or sink in from desired print positions, the adjustment pattern cannot meet the precision required for adjustment of the printhead or the printing apparatus, and therefore the adjustments (1) to (3) described above cannot be executed with high precision.

Thus, in order to execute proper adjustment, it is necessary to print an adjustment pattern after a first image to serve as a foundation is sufficiently fixated, as shown in Figs. 12A to 12D.

The following describes one of the characteristic configurations of the present embodiment, or specifically, a method for performing the registration adjustment of the printhead or the conveyance adjustment of the printing apparatus by using a transparent or colored printing medium.

In the present embodiment, first, an image to serve as a foundation (a first image) is printed on the printing medium P using the W ink, the printed image is sufficiently fixated, and then an adjustment pattern is printed on the foundation using color inks, namely the K, C, M, and Y inks. This enables the positional adjustment of the K, C, M, and Y nozzles of the printhead even in a case where the printing medium P used is transparent or colored.

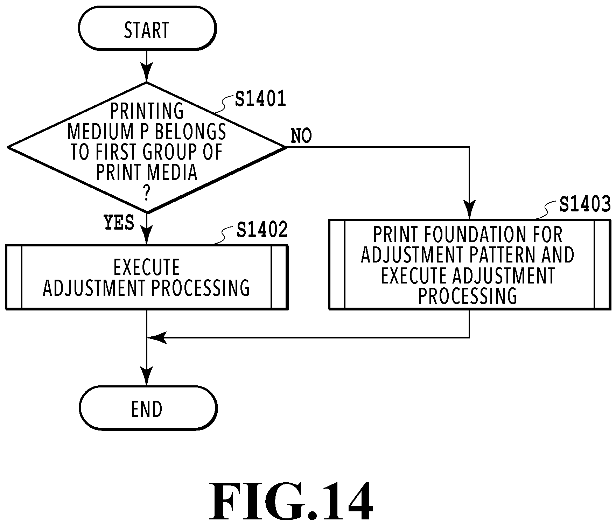

Various printing media usable in the printing apparatus A are classified in advance into a first group of printing media and a second group of printing media based on their optical reflectivity and color tone. A white printing medium is classified into the first group of printing media, and a transparent printing medium and a colored printing medium are classified into the second group of printing media. The printing apparatus A holds information on these groups of print media (printing medium group information). A technical characteristic of the present embodiment is implemented using this printing medium group information (see Fig. 14).

Fig. 14 is a flowchart of processing performed upon execution of the (1) registration adjustment or the (2) conveyance adjustment described above. The processing in Fig. 14 is started once the CPU 102 is instructed to start execution of the (1) registration adjustment of the printhead or the (2) conveyance adjustment.

First in S1401, the CPU 102 determines whether the printing medium P to be printed belongs to the first group of printing media. If the determination result of this step is YES, the processing proceeds to S1402. Meanwhile, if the determination result of this step is NO (i.e., if the printing medium P belongs to the second group of printing media), the processing proceeds to S1403. Although the determination of this step is performed using the printing medium group information, the present disclosure is not limited to this mode. In another example, the determination of this step may be performed using information included in a print job that the printing apparatus obtains, the information being indicative of the group to which the printing medium P to be printed belongs: the first group of printing media or the second group of printing media. Alternatively, the user themself may select whether the printing medium P belongs to the first group of printing media or to the second group of printing media.

In S1402, the CPU 102 executes the adjustment processing, or specifically, the processing of S801 to S807 shown in the flowchart in Fig. 8.

In S1403, the CPU 102 prints a foundation for an adjustment pattern and then executes the adjustment processing.

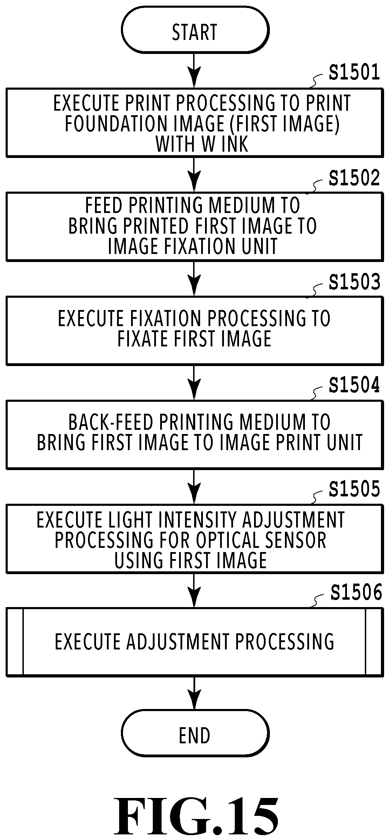

Fig. 15 shows a detailed flowchart of S1403.

First, in S1501, using the multi-pass printing method, the CPU 102 executes print processing to print a foundation image (a first image) with the W ink using the nozzles of the entire region of the nozzle array 33W shown in Fig. 3 that ejects the W ink. Note that the first image printed in the present embodiment is a solid image at 200% in A4 size (with one dot at 1200 dpi being 100%).

In S1502, the CPU 102 feeds the printing medium to bring the first image which has been printed (S1501) to the image fixation unit.

In S1503, the CPU 102 fixates the first image sufficiently by exposing the first image to a hot air at 80 °C. In order to be "sufficiently fixated," in the present embodiment, the first image is exposed to the hot air at 80 °C for a predetermined period of time set in advance.

In S1504, the CPU 102 back-feeds the printing medium to bring the first image fixated in S1503 to the image print unit.

In S1505, the CPU 102 executes light intensity adjustment processing for the optical sensor using the first image printed with the Wink.

In S1506, the CPU 102 executes the adjustment processing, or specifically, the processing in S802 to S807 shown in the flowchart in Fig. 8.

The processing in S1501 to S1505 described above is a characteristic configuration of the present embodiment. This processing makes it possible to execute proper adjustment necessary in executing (1) the registration adjustment or (2) the conveyance adjustment even in a case where a transparent or colored low-permeable printing medium is used.

As described above, in the present embodiment, a first image to serve as a foundation is printed and is then fixated by the image fixation unit. After that, the printing medium is back-fed to bring the first image to the image printing region where the image print unit can perform printing, and an adjustment pattern is printed on top of the first image.

In such a mode of the present embodiment where the printing medium is back-fed after the printed first image is fixated by the image fixation unit, the print start position may differ between the first image and the adjustment pattern because of the conveyance precision at the time of back-feeding. In this regard, in the present embodiment, the first image is printed on the entire region to serve as the background of the adjustment pattern, and therefore some difference in the print start position between the first image and the adjustment pattern is not problematic. From the above-described perspective, in actual image printing mode to print a given image, unlike in adjustment pattern printing mode to print an adjustment pattern, a second image is printed on a first image without the fixating unit fixating the printed first image.

The above-described multi-pass printing method using a different nozzle group for each ink is one method for causing less shift in the print start position between the first image to serve as a foundation and an image to be on top of the first image. In such a multi-pass printing method, after a foundation image is printed, a given image is printed on the foundation image without the foundation image being fixated by the image fixation unit.

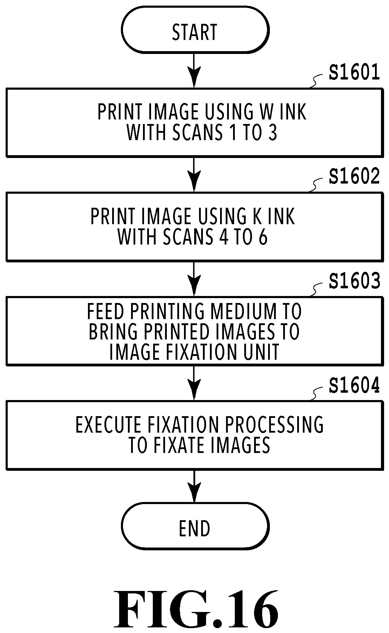

As a flowchart of the multi-pass printing method that uses a different nozzle group for each ink, Fig. 16 is referred to to describe a case where an image of the Wink and an image of the K ink are completed with six scans with respect to a predetermined region.

First, in S1601, an image is printed using the W ink with the first to third scans. Print data for the W ink is divided so that printing of the image may be completed with the first to third scans, and the third scan completes printing of the image with the Wink.

Next, in S1602, an image is printed using the Kink with the fourth to sixth scans. Print data for the K ink is divided so that printing of the image may be completed with the fourth to sixth scans. In the fourth to sixth scans, the image with the K ink is printed on the image with the W ink which has been printed by the first to third scans. The sixth scan completes printing of the image with the K ink. This completes printing of the image of the K ink on the image with the W ink on the predetermined region.

In S1603, the CPU 102 feeds the printing medium to bring the printed images to the image fixation unit.

In S1604, using the image fixation unit, the CPU 102 executes fixation processing to fixate the images onto the printing medium.

The printing method shown in Fig. 16 has no need to back-feed the printing medium before printing an image on top of the foundation image. Thus, there is less misalignment between the foundation image and the image printed thereon, making it possible to obtain a high-quality image.

However, with the above-described multi-pass printing method that uses a different nozzle group for each ink color, the image fixation unit cannot fixate only the foundation image. Thus, there is a concern of mixing of colors of the ink used to print the foundation image (the first ink) and the ink used to print the image on top of the foundation (the second ink). Thus, in order to avoid mixing of the colors of the first ink and the second ink, the printing and scanning needs to be slowed down to dry the first ink to a certain degree during the printing and scanning.

For such a reason, the multi-pass printing method is typically employed in a case of needing a foundation image and also printing an image with high quality rather than with short printing time.

In the printing of the adjustment pattern, as described above, there is no need for the region of the foundation image and the region of the image of the adjustment pattern to coincide in position with high precision. Thus, the printing method described in the present embodiment is employed to be able to shorten the adjustment time.

In this way, in the present embodiment, after the foundation image is printed using the W ink on the printing medium P and is sufficiently fixated, an adjustment pattern is printed on the foundation using the K, C, M, and Y inks. After that, the printed adjustment pattern is read. This configuration makes it possible to measure the difference in density dependent on the amount of shift between a reference pattern and a shifted pattern of the K, C, M, or Y ink and therefore makes it possible to perform the registration adjustment of the K, C, M, and Y nozzles of the printhead and the conveyance adjustment.

[Second Embodiment]

The present embodiment describes a method for performing color calibration using a transparent or colored printing medium. The present embodiment is characteristic in that an adjustment pattern is fixated at different timing from that in the first embodiment.

As described in the (1) registration adjustment and the (2) conveyance adjustment in the first embodiment, the timing of fixation of an adjustment pattern in the color calibration is different from that in the registration adjustment or the conveyance adjustment. Specifically, in the registration adjustment or the conveyance adjustment, an adjustment pattern is lastly fixated in S807 after the adjustment pattern is read in S803 (see Fig. 8). By contrast, in the color calibration, after an adjustment pattern is fixated in S1004, the adjustment pattern is read in S1006 (see Fig. 10A).

In performing the color calibration, it is important that the color of the adjustment pattern is stable, and it is therefore necessary to sufficiently dry the ink used to print the adjustment pattern. For this reason, the adjustment pattern is fixated at the image fixation unit before the adjustment pattern is read.

By contrast, as shown in Figs. 7A, 7B, 9A, and 9B, the registration adjustment or the conveyance adjustment measures the density which is dependent on the positional shift between the reference pattern and the shifted pattern of the adjustment pattern, and therefore there is no need for the color of the adjustment pattern to be stable. Thus, to shorten the adjustment time, the adjustment pattern is fixated after being read. In a case where the adjustment pattern is fixated after being read, the adjustment time can be shortened because there is no need to perform S1005 (the back-feeding step) shown in Fig. 10A.

In the present embodiment, first, using the W ink, an image to serve as a foundation (a first image) is printed on a transparent or colored printing medium P, and after the image with the W ink is sufficiently fixated, the above-described adjustment pattern shown in Fig. 11 is printed on the foundation using the K, C, M, and Y inks. In this way, even in a case of using a transparent or colored printing medium, color calibration can be performed on the K nozzles, C nozzles, M nozzles, and Y nozzles of the printhead.

Various printing media usable in the printing apparatus A are classified in advance into the first group of printing media and the second group of printing media based on their optical reflectivity and color tone. Specifically, a white printing medium is classified into the first group of printing media, and a transparent printing medium and a colored printing medium are classified into the second group of printing media. The printing apparatus A holds information on these groups of print media (printing medium group information). A technical characteristic of the present embodiment is implemented using this printing medium group information.

Fig. 14 is a flowchart of processing performed in the present embodiment upon execution of color calibration. This processing is similar to the flowchart of the processing performed in the first embodiment upon execution of the registration adjustment and the conveyance adjustment.

First in S1401, the CPU 102 determines whether the printing medium P to be printed belongs to the first group of printing media. If the determination result of this step is YES, the processing proceeds to S1402. Meanwhile, if the determination result of this step is NO, the processing proceeds to S1403.

In S1402, the CPU 102 executes adjustment processing, or specifically, the processing in S1001 to S1007 shown in the flowchart in Fig. 10A.

In S1403, the CPU 102 prints a foundation for an adjustment pattern, and after that, the adjustment processing is executed.

Fig. 15 shows a detailed flowchart of S1403. Fig. 15 is the flowchart described in the first embodiment, and the present embodiment is described using the same flowchart.

First, in S1501, using the multi-pass printing method, the CPU 102 executes print processing to print a foundation image (a first image) with the W ink by using the nozzles of the entire region of the nozzle array 33W shown in Fig. 3 that ejects the W ink. Note that the first image printed in the present example is a solid image at 200% in A4 size (with one dot at 1200 dpi being 100%).

In S1502, the CPU 102 feeds the printing medium to bring the first image which has been printed (S1501) to the image fixation unit.

In S1503, the CPU 102 fixates the first image sufficiently by exposing the first image to a hot air at 80 °C. In order to be "sufficiently fixated," in the present embodiment, the first image is exposed to the hot air at 80 °C for a predetermined period of time set in advance.

In S1504, the CPU 102 back-feeds the printing medium to bring the first image fixated in S1503 to the image print unit.

In S1505, the CPU 102 executes the light intensity adjustment processing for the optical sensor using the first image printed with the Wink.

In S1506, the CPU 102 executes the adjustment processing, or specifically, the processing in S1002 to S1007 shown in the flowchart in Fig. 10A.

The processing in S1501 to S1505 described above is a characteristic configuration of the present embodiment.

This processing makes it possible to execute proper adjustment necessary in executing the color calibration even in a case where a transparent or colored low-permeable printing medium is used.

Note that in a case where the color of a printing medium or of the first image to serve as a foundation is white, measurement values cannot be obtained for patches printed with the W ink. In view of this point, in the present embodiment, adjustment is not performed for the W nozzles that eject the W ink. Although the adjustment pattern 400 used in the present embodiment includes the patch 405 for the W ink, this patch 405 of the adjustment pattern 400 is not read in S1006. Alternatively, the adjustment pattern may be printed without the patch 405 and include only the patches 401 to 404.

In the present embodiment described thus far, like in the first embodiment, after the first image to serve as a foundation is printed and is fixated by the image fixing unit, the printing medium is back-fed to bring the first image to the image print unit, and an adjustment pattern is printed on top of the first image.

In the mode where the printing medium is back-fed to bring the first image to the image printing region after the printed first image is fixated by the image fixation unit, there is a concern that the print start position is different between the first image and the adjustment pattern because of the conveyance precision at the time of back-feeding. In this regard, the first image to serve as a foundation is printed on the entire region as the background of the adjustment pattern, and therefore some difference in the print start position between the first image and the adjustment pattern is not problematic. Thus, as described in the first embodiment, the first image can be fixated at the image fixation unit, which allows the adjustment time to be shorter.

Meanwhile, as described in the first embodiment, the method in which a printing medium is back-fed after a first image is fixated by the image fixation unit and a second image is printed by the image print unit on the first image is not preferable in printing of a given image from the perspective of image quality. Thus, a given image is printed using a method described in the first embodiment.

In this way, in the present embodiment, after an image to serve as a foundation is printed on the printing medium P using the W ink and is sufficiently fixated, an adjustment pattern is printed on the foundation using the K, C, M, and Y inks. After that, the printed adjustment pattern is fixated and read. This configuration makes it possible to measure density difference which is dependent on the difference in the exposure amount of the W-ink foundation according to the ink amount of K, C, M, Y and therefore makes it possible to perform color calibration of the K, C, M, and Y nozzles of the printhead.

[Third Embodiment]

The present embodiment describes a method for performing color calibration of the W ink (also referred to as white ink) ejected from the W nozzles. The differences in density between W-ink patches printed on a white printing medium cannot be measured because the ink and the printing medium are the same color. Also, the differences in density between W-ink patches printed on a transparent printing color cannot be measured either because the measurement is affected by the color of the platen 4.

Thus, in the present embodiment, an image to serve as a foundation (a first image) is printed on the printing medium P using the K ink (also referred to as black ink), the K-ink image is sufficiently fixated, and then an adjustment pattern is printed on the foundation using the W ink. This makes it possible to measure density difference which is dependent on the difference in the exposure amount of the K-ink foundation according to the amount of the W ink, and the color calibration of the W ink can be performed. Note that the ink used to print the foundation is preferably the K ink with high absorbency of light but is not limited to the K ink. Other inks (such as the C ink) can be used as long as desired density difference can be measured.

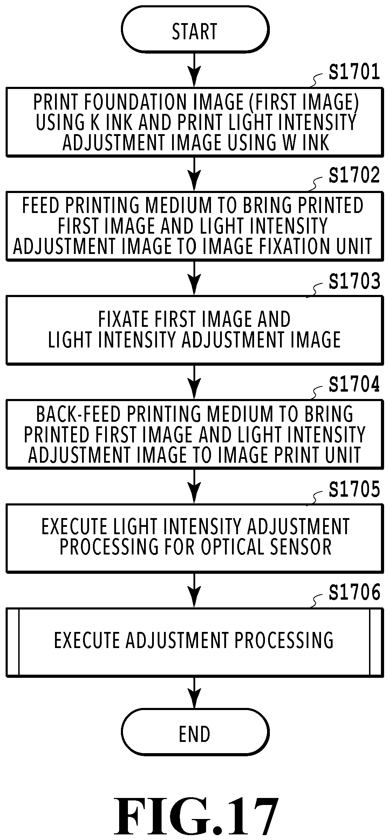

Fig. 17 is a flowchart of color calibration of the W ink in the present embodiment. In the color calibration of the W ink, a foundation for an adjustment pattern is printed without fail irrespective of the type of the printing medium P.

First, in S1701, using the multi-pass printing method, the CPU 102 prints a foundation image (a first image) with the K-ink using the nozzles in the entire region of the nozzle array 33K shown in Fig. 3 that ejects the K ink. Simultaneously, to execute light intensity adjustment, the CPU 102 prints an light intensity adjustment image using the nozzles in the entire region of the nozzle array 33W that ejects the W ink, the image being side by side with the first image in the main scanning direction. Note that the first image and the light intensity adjustment image printed in the present example are a solid image at 200% in A4 size (with one dot at 1200 dpi being 100%).

In S1702, the CPU 102 feeds the printing medium to bring the first image and the light intensity adjustment image which have been printed (S1701) to the image fixation unit.

In S1703, the CPU 102 fixates the first image and the light intensity adjustment image sufficiently by exposing the first image and the light intensity adjustment image to a hot air at 80 °C. In order to be "sufficiently fixated," in the present embodiment, the first image and the light intensity adjustment image are exposed to the hot air at 80 °C for a predetermined period of time set in advance.

In S1704, the CPU 102 back-feeds the printing medium to bring the first image and the light intensity adjustment image fixated in S1703 to the image print unit.

In S1705, the CPU 102 executes light intensity adjustment processing for the optical sensor using the light intensity adjustment image printed with the Wink.

In S1706, the CPU 102 executes adjustment processing, or specifically, the processing in S1002 to S1007 shown in the flowchart in Fig. 10A.

The processing in S1701 to S1705 described above is a characteristic configuration of the present embodiment. This processing makes it possible to perform proper adjustment for the color calibration of the Wink.

Note that although the adjustment pattern 400 used in the present embodiment includes the patches 401 to 404 not by the W ink, the patches 401 to 404 in the adjustment pattern 400 are not read in S1006. Alternatively, the adjustment pattern printed may include only the white-ink patch 405.

Also, although the light intensity of the optical sensor is adjusted using the light intensity adjustment image printed with the W ink in the present embodiment, other means may be used. For example, in a case where a white plate is disposed in the printing apparatus, the white plate may be used. Also, in a case where a printing medium is white, the printing medium may be used. In this case, the light intensity adjustment image do not need to be printed.

In this way, in the present embodiment, an image to serve as a foundation is printed on the printing medium P using the K ink, the K-ink image is sufficiently fixated, and then an adjustment pattern is printed on the foundation using the W ink. After that, the printed adjustment pattern is fixated and read. This configuration makes it possible to measure density difference which is dependent on the exposure difference of the K-ink foundation according to the amount of the Wink.

[Other Embodiments]

In the embodiments described above, the printing apparatus A holds, in advance, printing medium group information indicative of classification of print media into groups (the first group of printing media and the second group of printing media) and uses the printing medium group information to determine whether to print a foundation for an adjustment pattern. However, the present disclosure is not limited to this mode, and the printing apparatus A does not have to hold the printing medium group information. For example, a user may select the printing medium group to which the printing medium to be printed belongs. Also, for example, the reflectivity of the printing medium may be measured using the optical sensor installed in the printing apparatus, and the printing medium group may be automatically selected based on the measured reflectivity. In one example of the automatic selection based on reflectivity, with a reflectivity threshold being set to 0.5, processing for the first group of printing media is selected in a case where the measured reflectivity is equal to or greater than the threshold, and processing for the second group of printing media is selected in a case where the measured reflectivity is smaller than the threshold. Also, for example, the color tone of the printing medium may be measured using the optical sensor installed in the printing apparatus, and the printing medium group may be automatically selected based on the measured color tone.

Also, although the multi-pass printing method is used in the above-described embodiments as a method for printing the first image to serve as a foundation, the printing method is not limited to the multi-pass method. For example, depending on the ink, the adjustment pattern, or the like, printing of the image to serve as a foundation may be completed with one scan. Completing the printing of an image with fewer scans allows the printing time for the image to be shorter and therefore allows the adjustment time to be shorter.

Also, although the first image to serve as a foundation for an adjustment pattern is a solid image at 200% (with one dot at 1200 dpi being 100%) in the embodiments described above, the first image is not limited to a solid image at 200%.

Depending on an adjustment pattern, adjustment values can be obtained even with a first image with a smaller print coverage (%). Thus, the print coverage (%) may be set appropriately. For example, depending on an adjustment pattern, the print coverage (%) of a first image to serve as a foundation for a given image may be smaller than that of a first image to serve as a foundation for the adjustment pattern. A lower print coverage (%) of the first image as a foundation for the adjustment pattern shortens the fixation time for the first image and therefore shortens the adjustment time. Note that a print coverage means the amount of ink applied per unit area.

Also, although the first image to serve as a foundation for an adjustment pattern is in the size of A4 in the embodiments described above, the size of the first image is not limited to A4-size. The size of the first image as a foundation may be changed appropriately according to the size of the adjustment pattern, as long as the first image is large enough to be the background of the adjustment pattern. In a case where the adjustment pattern is small, the first image too may be small. The smaller the first image printed, the shorter the printing time for the first image and the fixation time for the first image, and therefore, the adjustment time can be shortened.

Also, although the optical sensor 200 obtains density values as the measurement values of the adjustment pattern in the various kinds of adjustment, namely the registration adjustment, the conveyance adjustment, and the color calibration, the measurement values are not limited to density values. For example, a colorimeter capable of obtaining color values may be used to obtain CMYK values, L*a*b values, XYZ values, or RGB values of the pattern.

Also, in a case where light intensity adjustment is performed using a white plate used in typical light intensity adjustment, proper measurement values cannot be obtained due to the influence of the color of the foundation for the adjustment pattern described above; therefore, the characteristic configurations of the present disclosure can be applied to make proper adjustment possible.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

The present disclosure can automatically perform various kinds of adjustment of a printing apparatus capable of performing printing using white ink.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A printing apparatus(A) comprising:

   a feed unit that feeds a printing medium(P);
   a print unit(9) including a first print element array of a plurality of print elements for applying a first ink onto the printing medium(P) and a second print element array of a plurality of print elements for applying a second ink onto the printing medium(P); and
   a fixation unit that is located downstream of the print unit in a feed direction(Y-direction) and fixates an image printed on the printing medium(P), wherein
   the print unit(9) prints a first image on the printing medium(P) by applying the first ink,
   the feed unit feeds the printing medium(P) on which the first image has been printed to the fixation unit from upstream to downstream in the feed direction(Y-direction),
   the fixation unit fixates the first image,
   the feed unit back-feeds the printing medium(P) on which the first image has been fixated to the print unit(9) from downstream to upstream in the feed direction(Y-direction), and
   the print unit(9) prints a second image on the first image by applying the second ink.

2. The printing apparatus according to claim 1, wherein
   the second image is at least one of a registration adjustment pattern, a feed adjustment pattern, and a color calibration pattern.

3. The printing apparatus according to claim 1, wherein
   the first ink is an ink for a foundation.

4. The printing apparatus according to claim 1, wherein
   the first ink contains a white color material.

5. The printing apparatus according to claim 1, further comprising a read unit for reading the second image.

6. The printing apparatus according to claim 5, wherein
   in a case where the second image is a registration adjustment pattern or a feed adjustment pattern, after the second image is read by the read unit, the feed unit feeds the printing medium to the fixation unit, and the second image is fixated.

7. The printing apparatus according to claim 5, wherein
in a case where the second image is a color calibration pattern, the feed unit feeds the printing medium on which the second image has been printed to the fixation unit, the fixation unit fixates the second image, and the read unit reads the fixated second image.

8. The printing apparatus according to claim 5, further comprising a determination unit that determines an adjustment value based on a read result of the second image.

9. The printing apparatus according to claim 1, further comprising an obtainment unit that obtains information indicative of a type of the printing medium.

10. The printing apparatus according to claim 1, wherein
in a case where the printing medium is a white printing medium, the print unit prints the second image without printing the first image.

11. The printing apparatus according to claim 1, wherein
in a case of printing a user image, between printing of a third image by the print unit using the first ink and printing of a fourth image by the print unit using the second ink, the third image is not fixated by the fixation unit.

12. The printing apparatus according to claim 11, wherein

the feed unit feeds the printing medium on which the third image and the fourth image have been printed by the print unit to the fixation unit, and
the fixation unit fixates the third image and the fourth image printed on the printing medium.

13. The printing apparatus according to claim 1, wherein
the first image is a solid image formed by the first ink and having a uniform density.

14. A method for controlling a printing apparatus(A) having a feed unit that feeds a printing medium(P),

a print unit(9) including a first print element array of a plurality of print elements for applying a first ink onto the printing medium(P) and a second print element array of a plurality of print elements for applying a second ink onto the printing medium(P),
a fixation unit that is located downstream of the print unit(9) in a feed direction(Y-direction) and fixates an image printed on the printing medium(P), and
a control unit, the method comprising:

by the control unit, using the print unit(9) to print a first image on the printing medium(P) by applying the first ink;
by the control unit, using the feed unit to feed the printing medium(P) on which the first image has been printed to the fixation unit from upstream to downstream in the feed direction(Y-direction),
by the control unit, using the fixation unit to fixate the first image,
by the control unit, using the feed unit to back-feed the printing medium(P) on which the first image has been fixated to the print unit(9) from downstream to upstream in the feed direction(Y-direction), and
by the control unit, using the print unit(9) to print a second image on the first image by applying the second ink.

15. A program for causing a computer to execute a method for controlling a printing apparatus(A) having

a feed unit that feeds a printing medium(P),
a print unit(9) including a first print element array of a plurality of print elements for applying a first ink onto the printing medium(P) and a second print element array of a plurality of print elements for applying a second ink onto the printing medium(P),
a fixation unit that is located downstream of the print unit(9) in a feed direction(Y-direction) and fixates an image printed on the printing medium(P), and
a control unit, the method comprising:

by the control unit, using the print unit(9) to print a first image on the printing medium(P) by applying the first ink;

by the control unit, using the feed unit to feed the printing medium(P) on which the first image has been printed to the fixation unit from upstream to downstream in the feed direction(Y-direction),

by the control unit, using the fixation unit to fixate the first image,

by the control unit, using the feed unit to back-feed the printing medium(P) on which the first image has been fixated to the print unit(9) from downstream to upstream in the feed direction(Y-direction), and

by the control unit, using the print unit(9) to print a second image on the first image by applying the second ink.

A

22

X

7

8

Y

P

12

4

# FIG.1

**FIG.2**

9

1200 dpi ⟷

30

34

33K    33C    33M    33Y    33W

33

# FIG.3

## FIG.4A

## FIG.4B

EP 4 520 540 A1

**FIG.5**

SCAN 1

A6  SCAN 2

A5  SCAN 3

A4  SCAN 4

A3  SCAN 5

A2  SCAN 6

A1

33W,33K

Y

Z X

P

80

## FIG.6A

55K
55W

44K
44W

33K  33W

## FIG.6B

A6

A5  55K

A4

A3

A2  44W

A1

## FIG.6C

FIG.7A

FIG.7C

FIG.7B

START

↓ S801

EXECUTE LIGHT INTENSITY ADJUSTMENT
PROCESSING FOR OPTICAL SENSOR

↓ S802

EXECUTE PRINT PROCESSING TO
PRINT ADJUSTMENT PATTERN
USING IMAGE PRINT UNIT

↓ S803

EXECUTE READ PROCESSING TO
READ ADJUSTMENT PATTERN

↓ S804

CALCULATE ADJUSTMENT VALUE

↓ S805

SET (STORE) ADJUSTMENT VALUE

↓ S806

FEED PRINTING MEDIUM TO
BRING ADJUSTMENT PATTERN TO
IMAGE FIXATION UNIT

↓ S807

EXECUTE FIXATION PROCESSING
TO FIXATE ADJUSTMENT PATTERN

↓

END

# FIG.8

BLOCK 1

BLOCK 2

UPSTREAM

Y-DIRECTION

0 1 2 3 4 5 6

REFERENCE
PATTERN

BEFORE
SHEET CONVEYANCE

# FIG.9A

UPSTREAM

Y-DIRECTION

0 1 2 3 4 5 6

SHIFTED
PATTERN

AFTER
SHEET CONVEYANCE

# FIG.9B

EP 4 520 540 A1

START

EXECUTE LIGHT INTENSITY
ADJUSTMENT PROCESSING
FOR OPTICAL SENSOR
— S1001

EXECUTE PRINT PROCESSING TO
PRINT ADJUSTMENT PATTERN 400
USING IMAGE PRINT UNIT
— S1002

FEED PRINTING MEDIUM TO BRING
ADJUSTMENT PATTERN 400 TO
IMAGE FIXATION UNIT
— S1003

EXECUTE FIXATION PROCESSING TO
FIXATE ADJUSTMENT PATTERN 400
— S1004

BACK-FEED PRINTING MEDIUM TO
BRING ADJUSTMENT PATTERN 400
TO IMAGE PRINT UNIT
— S1005

EXECUTE READ PROCESSING TO
READ ADJUSTMENT PATTERN 400
— S1006

STORE DENSITY VALUES
— S1007

END

## FIG.10A

START

READ DENSITY VALUES
— S1011

GENERATE CORRECTION VALUE
(COLOR CORRECTION PARAMETER)
— S1012

APPLY CORRECTION VALUE
(COLOR CORRECTION PARAMETER)
— S1013

EXECUTE PRINT PROCESSING
BASED ON IMAGE DATA
— S1014

END

## FIG.10B

400

401

402

403

404

405

# FIG.11

FIRST INK

P

# FIG.12A

Q

# FIG.12B

SECOND INK

# FIG.12C

# FIG.12D

FIRST INK

P

# FIG.13A

SECOND INK

R

# FIG.13B

# FIG.13C

START

S1401

PRINTING
MEDIUM P BELONGS
TO FIRST GROUP OF
PRINT MEDIA
?

NO

YES

S1402

EXECUTE
ADJUSTMENT PROCESSING

S1403

PRINT FOUNDATION FOR
ADJUSTMENT PATTERN AND
EXECUTE ADJUSTMENT
PROCESSING

END

# FIG.14

START

S1501
EXECUTE PRINT PROCESSING TO PRINT
FOUNDATION IMAGE (FIRST IMAGE)
WITH W INK

S1502
FEED PRINTING MEDIUM TO
BRING PRINTED FIRST IMAGE TO
IMAGE FIXATION UNIT

S1503
EXECUTE FIXATION PROCESSING TO
FIXATE FIRST IMAGE

S1504
BACK-FEED PRINTING MEDIUM TO
BRING FIRST IMAGE TO IMAGE PRINT UNIT

S1505
EXECUTE LIGHT INTENSITY ADJUSTMENT
PROCESSING FOR OPTICAL SENSOR
USING FIRST IMAGE

S1506
EXECUTE ADJUSTMENT PROCESSING

END

# FIG.15

START

S1601
PRINT IMAGE USING W INK
WITH SCANS 1 TO 3

S1602
PRINT IMAGE USING K INK
WITH SCANS 4 TO 6

S1603
FEED PRINTING MEDIUM TO
BRING PRINTED IMAGES TO
IMAGE FIXATION UNIT

S1604
EXECUTE FIXATION PROCESSING
TO FIXATE IMAGES

END

# FIG.16

START

↓ S1701

PRINT FOUNDATION IMAGE (FIRST IMAGE)
USING K INK AND PRINT LIGHT INTENSITY
ADJUSTMENT IMAGE USING W INK

↓ S1702

FEED PRINTING MEDIUM TO BRING PRINTED
FIRST IMAGE AND LIGHT INTENSITY
ADJUSTMENT IMAGE TO IMAGE FIXATION UNIT

↓ S1703

FIXATE FIRST IMAGE AND
LIGHT INTENSITY ADJUSTMENT IMAGE

↓ S1704

BACK-FEED PRINTING MEDIUM TO BRING
PRINTED FIRST IMAGE AND LIGHT INTENSITY
ADJUSTMENT IMAGE TO IMAGE PRINT UNIT

↓ S1705

EXECUTE LIGHT INTENSITY ADJUSTMENT
PROCESSING FOR OPTICAL SENSOR

↓ S1706

EXECUTE ADJUSTMENT PROCESSING

↓

END

# FIG.17

Europäisches
Patentamt

European
Patent Office

Office européen
des brevets

# EUROPEAN SEARCH REPORT

Application Number

EP 24 19 6375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/038652 A1 (MITSUZAWA TOYOHIKO [JP]) 14 February 2013 (2013-02-14) | 1-4, 10-15 | INV. B41J11/00 |
| Y | * paragraphs [0054], [0152] - [0161]; figures 1, 15A-15C * | 5-9 | B41J2/21 G06K15/02 |
| | ----- | | H04N1/00 |
| X | US 2014/098169 A1 (AOKI KATSUKO [JP] ET AL) 10 April 2014 (2014-04-10) | 1-4, 10-15 | B41J15/04 |
| Y | * paragraphs [0042], [0044], [0049], [0053], [0054]; figures 2, 4 * | 5-9 | ADD. B41J29/393 |
| | ----- | | |
| X | US 2013/286079 A1 (UCHIDA NAOKI [JP]) 31 October 2013 (2013-10-31) * paragraphs [0032], [0033], [0055] - [0060], [0085] - [0095] * | 1-13 | |
| | ----- | | |
| X | US 2017/274683 A1 (HORI NAOKI [JP] ET AL) 28 September 2017 (2017-09-28) * paragraphs [0041], [0060]; figure 1 * | 1-4, 10-13 | |
| | ----- | | |
| X | US 2013/328955 A1 (UTSUNOMIYA KOHEI [JP]) 12 December 2013 (2013-12-12) * paragraphs [0054], [0097]; figures 1-8 * | 1-4, 10-13 | TECHNICAL FIELDS SEARCHED (IPC) |
| | ----- | | B41J H04N |
| Y | US 2010/026750 A1 (ENDO HIRONORI [JP]) 4 February 2010 (2010-02-04) | 5-9 | G06M G06K |
| A | * paragraphs [0221], [0237] * | 2 | |
| | ----- | | |
| Y | US 2012/069359 A1 (HIRANO MASANORI [JP]) 22 March 2012 (2012-03-22) | 5-8 | |
| A | * paragraphs [0042], [0083] * | 2 | |
| | ----- | | |

The present search report has been drawn up for all claims

| Place of search | Date of completion of the search | Examiner |
|---|---|---|
| The Hague | 29 January 2025 | Loi, Alberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6375

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | | | Publication date | Patent family member(s) | | Publication date |
|---|---|---|---|---|---|---|
| US 2013038652 | A1 | | 14-02-2013 | CN | 101791911 A | 04-08-2010 |
| | | | | JP | 5604790 B2 | 15-10-2014 |
| | | | | JP | 2010179537 A | 19-08-2010 |
| | | | | US | 2010194838 A1 | 05-08-2010 |
| | | | | US | 2013038652 A1 | 14-02-2013 |
| | | | | US | 2014292929 A1 | 02-10-2014 |
| US 2014098169 | A1 | | 10-04-2014 | JP | 2013180428 A | 12-09-2013 |
| | | | | US | 2013222480 A1 | 29-08-2013 |
| | | | | US | 2014098169 A1 | 10-04-2014 |
| US 2013286079 | A1 | | 31-10-2013 | JP | 5997493 B2 | 28-09-2016 |
| | | | | JP | 2013226759 A | 07-11-2013 |
| | | | | US | 2013286079 A1 | 31-10-2013 |
| US 2017274683 | A1 | | 28-09-2017 | CN | 107379788 A | 24-11-2017 |
| | | | | EP | 3238945 A2 | 01-11-2017 |
| | | | | JP | 6613985 B2 | 04-12-2019 |
| | | | | JP | 2017170816 A | 28-09-2017 |
| | | | | US | 2017274683 A1 | 28-09-2017 |
| US 2013328955 | A1 | | 12-12-2013 | CN | 103481664 A | 01-01-2014 |
| | | | | CN | 105856867 A | 17-08-2016 |
| | | | | US | 2013328955 A1 | 12-12-2013 |
| US 2010026750 | A1 | | 04-02-2010 | EP | 1655135 A1 | 10-05-2006 |
| | | | | JP | 4107327 B2 | 25-06-2008 |
| | | | | JP | WO2005016648 A1 | 12-10-2006 |
| | | | | US | 2006158472 A1 | 20-07-2006 |
| | | | | US | 2010026750 A1 | 04-02-2010 |
| | | | | WO | 2005016648 A1 | 24-02-2005 |
| US 2012069359 | A1 | | 22-03-2012 | JP | 5772369 B2 | 02-09-2015 |
| | | | | JP | 2012081734 A | 26-04-2012 |
| | | | | US | 2012069359 A1 | 22-03-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021133601 A